(19) Europäisches Patentamt / European Patent Office / Office européen des brevets

(11) **EP 2 775 771 A1**

(12) **EUROPEAN PATENT APPLICATION**
published in accordance with Art. 153(4) EPC

(43) Date of publication:
**10.09.2014 Bulletin 2014/37**

(51) Int Cl.:
***H04W 72/08*** (2009.01)

(21) Application number: **12853530.9**

(86) International application number:
**PCT/CN2012/085545**

(22) Date of filing: **29.11.2012**

(87) International publication number:
**WO 2013/079009 (06.06.2013 Gazette 2013/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.11.2011 CN 201110386749**

(71) Applicant: **Huawei Technologies Co., Ltd.
Shenzhen, Guangdong 518129 (CN)**

(72) Inventors:
• **WU, Qiang
  Shenzhen
  Guangdong 518129 (CN)**
• **LIU, Jianghua
  Shenzhen
  Guangdong 518129 (CN)**

(74) Representative: **Pfenning, Meinig & Partner GbR
Patent- und Rechtsanwälte
Joachimstaler Strasse 12
10719 Berlin (DE)**

(54) **METHOD AND DEVICE FOR TRANSMITTING DATA ON PHYSICAL UPLINK CONTROL CHANNEL**

(57) Disclosed in embodiments of the present invention are a method and an apparatus for transmitting data on a physical uplink control channel PUCCH. When user equipments UEs in a cell have the same common cell identifier, the method includes: determining a first basic sequence according to the common cell identifier, and determining, according to the first basic sequence and correspondence between the first basic sequence and at least one second basic sequence, a first sequence group including the basic sequence and the at least one second basic sequence, where the at least one second basic sequence is obtained according to a correlation with the first basic sequence; determining a target basic sequence in the first sequence group; cyclically shifting the target basic sequence in a cyclic shift manner determined by negotiating with a base station, to obtain a sequence for sending a PUCCH; and sending the PUCCH according to the PUCCH sequence. In the embodiments of the present invention, when UEs in a macro cell and a pico cell perform CoMP, mutual interference between the UEs can be reduced.

FIG. 1

EP 2 775 771 A1

**Description**

**CROSS-REFERENCE TO RELATED APPLICATION**

This application claims priority to Chinese Patent Application No. 201110386749.0, filed with the Chinese Patent Office on November 29, 2011 and entitled "METHOD AND DEVICE FOR TRANSMITTING DATA ON A PHYSICAL UPLINK CONTROL CHANNEL", which is incorporated herein by reference in its entirety.

**TECHNICAL FIELD**

The present invention relates to the field of electronic control technologies, and in particular, to a method and an apparatus for transmitting data on a physical uplink control channel (PUCCH, Physical Uplink Control CHannel).

**BACKGROUND**

In a long term evolution (LTE, Lone Term Evolution) R8 (Release 8)/R9/R10 system, sequence numbers u used for PUCCHs of all UEs (User Equipments, user equipments) in a cell (Cell) are correlated with a cell identifier (Cell ID) of the cell and slot numbers. That is, for all UEs in a cell, in a certain slot, the same basic sequence number (also referred to as a basic sequence number) is used. When PUCCHs of multiple UEs in a cell use the same time-frequency resource for transmission, the PUCCHs of different UEs are distinguished through different cyclic shifts.

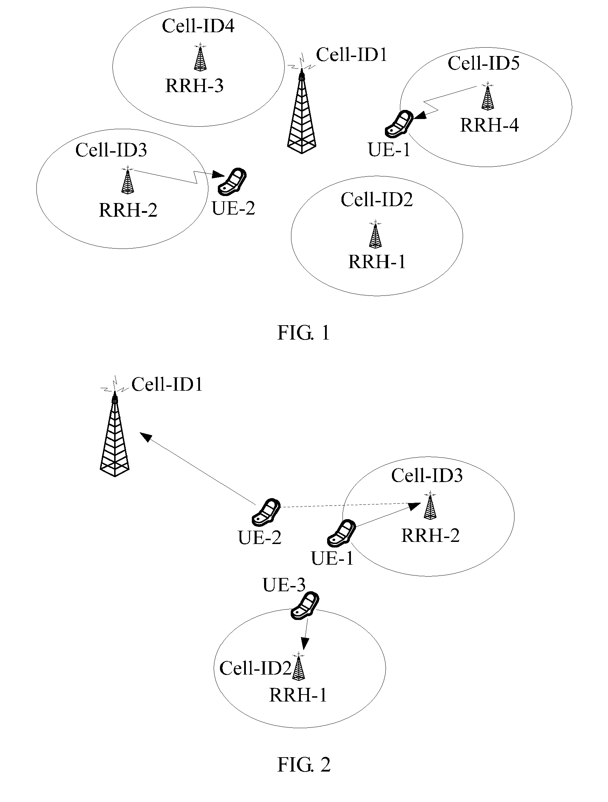

However, in a certain scenario, the prior art may have a defect. For example, in a scenario shown in FIG. 1, that is, in a scenario (Scenario 3) of coordinated multiple point transmission and reception (CoMP, Coordinated Multiple Point transmission and reception), a macro base station (Macro eNB) and multiple remote radio heads (RRHs, Remote Radio Heads) together implement cell coverage, where a coverage range of the Macro eNB is defined as a macro cell (Macro Cell), and a coverage range of the RRH is defined as a pico cell (Pico Cell). In the scenario, the macro cell and the pico cells adopt different Cell IDs. When CoMP reception of the PUCCH is performed, difference between Cell IDs of the macro cell and the pico cells means that PUCCH sequences used by the UEs performing the CoMP are different, so orthogonality between PUCCH sequences of the UEs performing the CoMP is poor, thereby affecting normal communication.

For example, referring to FIG. 2, both UE-1 and UE-3 belong to Pico Cells, UE-2 belongs to a Macro Cell, a PUCCH of UE-1 uses a PUCCH sequence having a number x, and a PUCCH of UE-2 uses a PUCCH sequence having a number y. Downlink transmission power of the Pico cell is much lower than downlink transmission power of the Macro Cell, so a coverage range of the Pico cell is also much smaller than a coverage range of the Macro Cell. If a distance between UE-2 and the Pico cell (Cell ID3) cell is short and a distance between UE-2 and Cell ID1 is long, UE-2 needs high transmission power to send data on the PUCCH. In this case, if the PUCCH of UE-1 and the PUCCH of UE-2 use the same time-frequency resource, the data sent by UE-2 on the PUCCH also reaches the Pico cell (Cell ID3). However, PUCCH basic sequences used by UE-1 and UE-2 are different, so the orthogonality of the PUCCH basic sequences is poor, thereby affecting normal communication. Similarly, for UE-3 whose PUCCH uses a PUCCH sequence having a number z, if the PUCCH of UE-3 and the PUCCH of UE-2 also use the same time-frequency resource, similarly, because PUCCH basic sequences used by UE-3 and UE-2 are different, the orthogonality of the PUCCH basic sequences is poor, so that great interference also exists between UE-3 and UE-2.

**SUMMARY**

In view of this, embodiments of the present invention provide a method and an apparatus for transmitting data on a PUCCH, so as to ensure the orthogonality of the PUCCH sequences used by UEs in a macro cell and a pico cell when the UEs perform CoMP, thereby reducing mutual interference between the UEs.

According to an aspect of the present invention, a method for transmitting data on a physical uplink control channel PUCCH is provided. When user equipments UEs in a cell have a same common cell identifier, the method includes:

   determining a first basic sequence according to the common cell identifier, and determining, according to the first basic sequence and correspondence between the first basic sequence and at least one second basic sequence, a first sequence group including the basic sequence and the at least one second basic sequence, where the at least one second basic sequence is obtained according to a correlation with the first basic sequence; determining a target basic sequence in the first sequence group; cyclically shifting the target basic sequence in a cyclic shift manner determined by negotiating with a base station, to obtain a sequence for sending a PUCCH; and sending the PUCCH according to the sequence for sending the PUCCH.

According to another aspect of the present invention, an apparatus for transmitting data on a physical uplink control channel PUCCH is provided, where the apparatus includes:

> a configuration unit, adapted to configure a same common cell identifier for user equipments UEs;
> a processing unit, adapted to determine a first basic sequence according to the common cell identifier configured by the configuration unit, and determine, according to the first basic sequence and correspondence between the first basic sequence and at least one second basic sequence, a first sequence group including the basic sequence and the at least one second basic sequence, where the at least one second basic sequence is obtained according to a correlation with the first basic sequence;
> a selection unit, adapted to determine a target basic sequence in the first sequence group determined by the processing unit;
> a shifting unit, adapted to cyclically shift the target basic sequence determined by the selection unit in a cyclic shift manner determined by negotiating with a base station, to obtain a sequence for sending a PUCCH; and
> a sending unit, adapted to send the PUCCH according to the sequence for sending the PUCCH obtained by the shifting unit.

It can be seen from the foregoing technical solutions that, compared with the prior art, for the case that a macro cell and a pico cell coexist, the embodiments of the present invention pre-define a Common Cell ID and a sequence group including multiple basic sequences for a communication cell formed of the macro cell and the pico cell, where sequences formed by cyclically shifting any two basic sequences used for the PUCCH in the sequence group randomly have a low shift correlation. Therefore, all UEs in the communication cell have the same Cell ID, which means that PUCCH sequences used by all the UEs belong to the same sequence group, and a correlation between the PUCCH sequences is small, that is, the PUCCH sequences have good orthogonality, so when the UEs in the macro cell and the pico cell perform CoMP, mutual interference between the UEs can be reduced.

## BRIEF DESCRIPTION OF DRAWINGS

To illustrate the technical solutions according to the embodiments of the present invention or in the prior art more clearly, the accompanying drawings required for describing the embodiments or the prior art are introduced in the following briefly. Apparently, the accompanying drawings in the following descriptions merely show some of the embodiments of the present invention, and persons of ordinary skill in the art can obtain other drawings according to the accompanying drawings without creative efforts.

> FIG. 1 is a schematic diagram of a CoMP scenario (Scenario 3);
> FIG. 2 is a schematic diagram of interference between UEs in Scenario 3;
> FIG. 3 is a schematic diagram of time-frequency grids in a slot;
> FIG. 4 is a flow chart of a method for transmitting data on a PUCCH provided by an embodiment of the present invention;
> FIG. 5 is a schematic diagram of a PUCCH on an SC-FDMA symbol;
> FIG. 6 is a schematic diagram of Scenario 3;
> FIG. 7 is a schematic diagram of Scenario 4; and
> FIG. 8 is a schematic structural diagram of an apparatus for transmitting data on a PUCCH provided by an embodiment of the present invention.

## DESCRIPTION OF EMBODIMENTS

Embodiments of the present invention provide a technical solution for a case where a macro cell and a pico cell coexist. When UEs in the macro cell and the pico cell perform CoMP, mutual interference between the UEs can be reduced, so as to ensure normal communication.

For the purpose of reference and clearness, technical terms, acronyms or abbreviations used in the following are summarized as follows:

> 3GPP, 3rd Generation Partnership Project, that is, third generation partnership project;
> LTE-A, that is, LTE-Advanced;
> MIMO, Multiple Input Multiple Output, that is, multiple input multiple output;
> eNodeB, that is, base station;
> CRS, Common Reference Signal, that is, common reference signal;
> PMI, Precoding Matrix index, precoding matrix index;

Uplink, uplink;
Downlink, downlink;
Rank, rank;
SC-FDMA, single carrier frequency division multiple access, that is, single carrier frequency division multiple access;
PUCCH, Physical Uplink Control Channel, that is, physical uplink control channel;
PUSCH, Physical Uplink Shared Channel, that is, physical uplink shared channel;
DCI, Downlink control information, that is, downlink control information;
TB, Transport Block, that is, transport block;
CW, Codeword, that is, codeword;
DFT, Discrete Fourier Transform, that is, discrete Fourier transform;
CSI, channel state information, that is, channel state information; and
CQI, channel quality information, that is, channel quality information.

The technical solution in the embodiments of the present invention is clearly and completely described in the following with reference to the accompanying drawings in the embodiments of the present invention. It is obvious that the embodiments to be described are only a part rather than all of the embodiments of the present invention. All other embodiments obtained by persons of ordinary skill in the art based on the embodiments of the present invention without creative efforts shall fall within the protection scope of the present invention.

In an LTE/LTE-A system of the 3GPP, SC-FDMA multiple access is used as an uplink multiple access manner. An uplink resource of the system is divided into SC-FDMA symbols in terms of time, and divided into sub-carriers in terms of frequency. According to the standard of the LTE Release 8/9/10, a radio frame is divided into 10 sub-frames, and a sub-frame is divided into two slots (slot). A radio frame has 20 slots (with slot numbers ns), and a normal uplink sub-frame (not an MBSFN sub-frame) is divided into two slots, and the two slots contain 14 SC-FDMA symbols (a normal CP, in a normal CP situation) or 12 OFDM symbols (an extended CP, in an extended CP situation) in total.

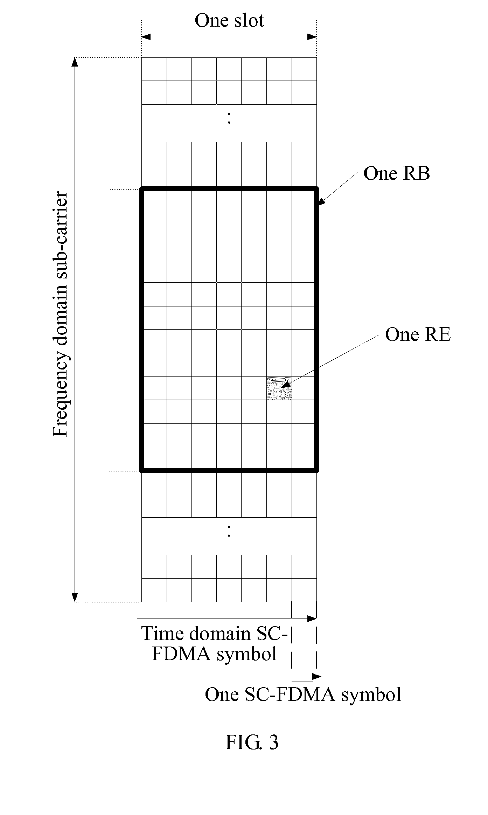

FIG. 3 is a schematic diagram of time-frequency grids in a slot, where an RB (Resource block) is the minimum unit in resource scheduling. An RB includes 12 sub-carriers in the frequency domain, and includes half of a sub-frame (a slot), that is, 7 symbols (a normal CP) or 6 symbols (an extended CP), in the time domain. An RE (Resource element) is the unit of a resource, and an RE is defined as a certain sub-carrier on a certain SC-FDMA symbol. An RB pair (RB pair) is defined as 12 sub-carriers in the frequency domain and a sub-frame (two slots) in the time domain.

In the LTE, a PUCCH may bear an ACK/NACK and CSI (including a PMI, CQI and a Rank), and a PUCCH channel of a UE is transmitted on an RB pair. At the same time, the 12 sub-carriers on an SC-FDMA symbol in the time domain bears a data symbol, and a sequence having a length of 12 is used to perform spread spectrum on the data symbol and then the data symbol is sent.

For the PUCCH, a total of 30 sequences are available, and the sequence having the length of 12 may be represented as:

$$\overline{r}_u(n) = e^{j\phi(n)\pi/4}, \ 0 \le n \le 11 \dots\dots\dots\dots\dots\dots\dots\dots\dots\dots\dots\dots\text{Formula 1}$$

According to the 3GPP 36.211 protocol, $\phi(n)$ of a basic sequence having the length of 12 is described in Table 1.
In the table, u represents a number of a sequence, also referred to as a sequence number.

**Table 1**

| U | $\phi(0),...,\phi(11)$ | | | | | | | | | | | |
|---|----|----|----|----|----|----|----|----|----|----|----|----|
| 0 | -1 | 1 | 3 | -3 | 3 | 3 | 1 | 1 | 3 | 1 | -3 | 3 |
| 1 | 1 | 1 | 3 | 3 | 3 | -1 | 1 | -3 | -3 | 1 | -3 | 3 |
| 2 | 1 | 1 | -3 | -3 | -3 | -1 | -3 | -3 | 1 | -3 | 1 | -1 |
| 3 | -1 | 1 | 1 | 1 | 1 | -1 | -3 | -3 | 1 | -3 | 3 | -1 |
| 4 | -1 | 3 | 1 | -1 | 1 | -1 | -3 | -1 | 1 | -1 | 1 | 3 |
| 5 | 1 | -3 | 3 | -1 | -1 | 1 | 1 | -1 | -1 | 3 | -3 | 1 |
| 6 | -1 | 3 | -3 | -3 | -3 | 3 | 1 | -1 | 3 | 3 | -3 | 1 |
| 7 | -3 | -1 | -1 | -1 | 1 | -3 | 3 | -1 | 1 | -3 | 3 | 1 |
| 8 | 1 | -3 | 3 | 1 | -1 | -1 | -1 | 1 | 1 | 3 | -1 | 1 |

(continued)

| U | $\varphi(0),...,\varphi(11)$ | | | | | | | | | | | |
|---|---|---|---|---|---|---|---|---|---|---|---|---|
| 9 | 1 | -3 | -1 | 3 | 3 | -1 | -3 | 1 | 1 | 1 | 1 | 1 |
| 10 | -1 | 3 | -1 | 1 | 1 | -3 | -3 | -1 | -3 | -3 | 3 | -1 |
| 11 | 3 | 1 | -1 | -1 | 3 | 3 | -3 | 1 | 3 | 1 | 3 | 3 |
| 12 | 1 | -3 | 1 | 1 | -3 | 1 | 1 | 1 | -3 | -3 | -3 | 1 |
| 13 | 3 | 3 | -3 | 3 | -3 | 1 | 1 | 3 | -1 | -3 | 3 | 3 |
| 14 | -3 | 1 | -1 | -3 | -1 | 3 | 1 | 3 | 3 | 3 | -1 | 1 |
| 15 | 3 | -1 | 1 | -3 | -1 | -1 | 1 | 1 | 3 | 1 | -1 | -3 |
| 16 | 1 | 3 | 1 | -1 | 1 | 3 | 3 | 3 | -1 | -1 | 3 | -1 |
| 17 | -3 | 1 | 1 | 3 | -3 | 3 | -3 | -3 | 3 | 1 | 3 | -1 |
| 18 | -3 | 3 | 1 | 1 | -3 | 1 | -3 | -3 | -1 | -1 | 1 | -3 |
| 19 | -1 | 3 | 1 | 3 | 1 | -1 | -1 | 3 | -3 | -1 | -3 | -1 |
| 20 | -1 | -3 | 1 | 1 | 1 | 1 | 3 | 1 | -1 | 1 | -3 | -1 |
| 21 | -1 | 3 | -1 | 1 | -3 | -3 | -3 | -3 | -3 | 1 | -1 | -3 |
| 22 | 1 | 1 | -3 | -3 | -3 | -3 | -1 | 3 | -3 | 1 | -3 | 3 |
| 23 | 1 | 1 | -1 | -3 | -1 | -3 | 1 | -1 | 1 | 3 | -1 | 1 |
| 24 | 1 | 1 | 3 | 1 | 3 | 3 | -1 | 1 | -1 | -3 | -3 | 1 |
| 25 | 1 | -3 | 3 | 3 | 1 | 3 | 3 | 1 | -3 | -1 | -1 | 3 |
| 26 | 1 | 3 | -3 | -3 | 3 | -3 | 1 | -1 | -1 | 3 | -1 | -3 |
| 27 | -3 | -1 | -3 | -1 | -3 | 3 | 1 | -1 | 1 | 3 | -3 | -3 |
| 28 | -1 | 3 | -3 | 3 | -1 | 3 | 3 | -3 | 3 | 3 | -1 | -1 |
| 29 | 3 | -3 | -3 | -1 | -1 | -3 | -1 | 3 | -3 | 3 | 1 | -1 |

After some knowledge involved in this application is introduced, the following focuses on the method for transmitting data on a PUCCH provided by the embodiment of the present invention.

The method is mainly applied to an environment where a macro cell and a pico cell coexist. Before the method is executed, some pre-operations need to be executed: predefining that all user equipments UEs in a communication cell formed of the cell macro cell and the pico cell have the same Common Cell ID, and setting a sequence group for the Common Cell ID, where the sequence group includes multiple basic sequences, and sequences formed by cyclically shifting any two basic sequences randomly have a low shift correlation.

A specific setting process of the sequence group is as follows:

first, defining a correlation between two PUCCH sequences:

defining $a = S_u^m$ as a sequence with a basic sequence u and a cyclic shift value m, and $b = S_v^k$ as a sequence with a basic sequence $v$ and a cyclic shift value k, where the basic sequence is generated according to Formula 1 and Table 1, where

a is set to be a sequence having a length of N, a = [a0,~aN-1] = [a(0),~a(N-1)], where ai= a(i), 0≤i≤N-1, and a sequence c obtained by cyclically shifting a by using a cyclic shift value m is represented as:

$$c(n) = a((n + m) \bmod N)$$ ……………………………………Formula 2

where 0≤$n$≤N-1, and $a(n)$ represents the nth element in the sequence a; and defining a correlation between a and b as:

$$\rho(a,b) = \frac{1}{N}\left|\sum_{i=0}^{N-1} a_i^* b_i\right| = \frac{1}{N}\left|\sum_{i=0}^{N-1} a_i b_i^*\right|$$ …………………………………Formula 3

Correlation values of different shift combinations between a basic sequence and other basic sequences are calculated according to Formula 3, and a maximum value and a minimum value in the correlation values are determined. Maximum correlation values of different shift combinations between a basic sequence and other basic sequences are described in Table 2.

**Table 2**

| u | Maximum Correlation Values of Different Shift Combinations Between u and Other Basic Sequences |
|---|---|
| 0 | 0.6009 |
| 1 | 0.7906 |
| 2 | 0.7169 |
| 3 | 0.7454 |
| 4 | 0.7071 |
| 5 | 0.8498 |
| 6 | 0.6667 |
| 7 | 0.7454 |
| 8 | 0.7454 |
| 9 | 0.8498 |
| 10 | 0.7906 |
| 11 | 0.6667 |
| 12 | 0.7906 |
| 13 | 0.6667 |
| 14 | 0.7454 |
| 15 | 0.6667 |
| 16 | 0.7906 |
| 17 | 0.7169 |
| 18 | 0.7169 |
| 19 | 0.7169 |
| 20 | 0.7071 |
| 21 | 0.5893 |
| 22 | 0.7454 |
| 23 | 0.6009 |
| 24 | 0.6872 |
| 25 | 0.7906 |
| 26 | 0.7454 |
| 27 | 0.6346 |
| 28 | 0.7071 |
| 29 | 0.6872 |

It can be seen from Table 2 that, if sequences of UE-1 and UE-2 in the scenario shown in FIG. 2 and shift values of the sequences just generate a maximum correlation value, PUCCH interference between UE-1 and UE-2 is great.

According to the correlation values of different shift combinations between a basic sequence and other basic sequences, a sequence having a low shift correlation with each basic sequence can be selected from the sequences as a companion sequence, and each basic sequence and its corresponding companion sequence are determined as a sequence group (a sequence group uses a number of a basic sequence as a group number). That is, in the 30 available basic sequences, each basic sequence has at least one companion sequence (that is, the basic sequence has a companion group and the group at least includes a sequence), as described in Table 3:

**Table 3**

| u | u of a Companion Sequence | Maximum Correlation Value (Considering Various Shifts of Two Sequences) |
|---|---|---|
| 0 | 9 | 0.3727 |
| 1 | 0 | 0.4249 |
| 2 | 0 | 0.3727 |
| 3 | 12 | 0.3727 |
| 4 | 11 | 0.3536 |
| 5 | 20 | 0.3727 |
| 6 | 20 | 0.3727 |
| 7 | 15 | 0.3727 |
| 8 | 19 | 0.3727 |
| 9 | 16 | 0.3536 |
| 10 | 16 | 0.4249 |
| 11 | 4 | 0.3536 |
| 12 | 3 | 0.3727 |
| 13 | 28 | 0.3536 |
| 14 | 16 | 0.3727 |
| 15 | 0 | 0.3727 |
| 16 | 9 | 0.3536 |
| 17 | 23 | 0.3727 |
| 18 | 22 | 0.3727 |
| 19 | 8 | 0.3727 |
| 20 | 5 | 0.3727 |
| 21 | 6 | 0.3727 |
| 22 | 4 | 0.3727 |
| 23 | 17 | 0.3727 |
| 24 | 9 | 0.4249 |
| 25 | 28 | 0.3536 |
| 26 | 6 | 0.3727 |
| 27 | 23 | 0.3727 |
| 28 | 13 | 0.3536 |
| 29 | 8 | 0.4249 |

In Table 3, in an example of a sequence number u=0, various shift correlation values between the basic sequence and other basic sequences (u=1 to u=29) are calculated. The specific manner is as follows:

u=0 and u=1 are compared. It is assumed that a basic sequence u=0 having a length of 12 is recorded as $R_0$. 12 cyclic shifts can be used for $R_0$, and a sequence having the length of 12 is generated in each cyclic shift. Correlation values between sequences generated by cyclically shifting u=0 and sequences generated by cyclically shifting u=1 are calculated (that is, correlation processing is performed by using Formula 3), where a total of 12×12 correlation values are obtained. A maximum value of the correlation values is taken as a maximum correlation value between the two sequences. Then, shift correlations between u=0 and other basic sequences except for u=0 are calculated, to obtain maximum shift correlation values between the basic sequence u=0 and other basic sequences. A minimum shift correlation value in the maximum shift correlation values between the basic sequence u=0 and other basic sequences is taken, and the corresponding basic sequence is a companion sequence of u=0.

For other u values, the method for calculating the companion sequences is similar, which is not described again.

According to the foregoing manner, when the number of the companion sequences of a basic sequence u is k (k>1), first, k basic sequences are sought from the rest 29 basic sequences, and a total of $C_{29}^{K}$ selection combinations exist. Assume that the k basic sequences selected in certain selection is $v_1$, $v_2$, ..., $v_k$, shift correlation values between any two of a combination u, $v_1$, $v_2$, ..., $v_k$ are calculated, and then a maximum correlation value is selected. In this manner, correlation values for possible $C_{29}^{k}$ selection combinations are calculated. According to the results, a combination in all the combinations having a minimum value in the maximum correlation values is selected as a companion group of the basic sequence u, and the basic sequence u and its companion group form a sequence group.

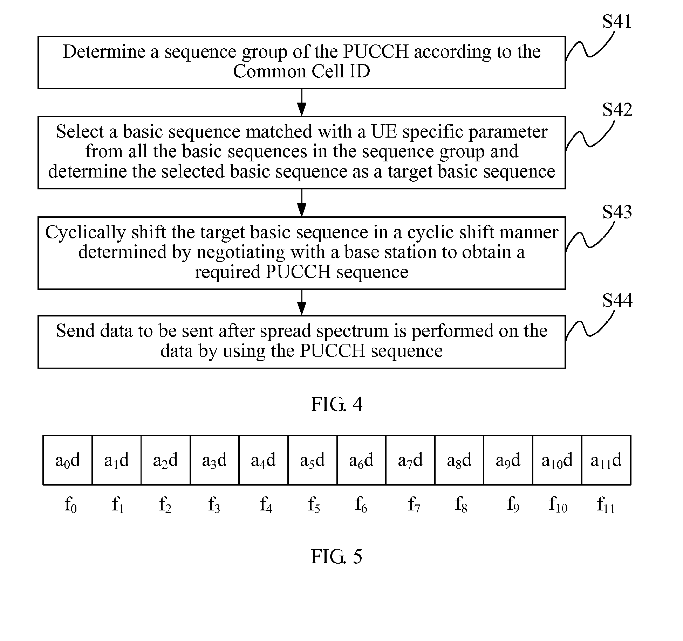

After the foregoing pre-operations are performed, the procedure of the method for transmitting data on a PUCCH provided by this embodiment is executed. Referring to FIG. 4, the procedure specifically includes the following steps:

Step S41: Determine a sequence group of the PUCCH according to the Common Cell ID.

A manner of determining the sequence group of the PUCCH according to the Common Cell ID is provided in the following:

Step a: Determine a first basic sequence number u of the sequence group of the PUCCH.

Specifically, the first basic sequence number *u* is obtained through calculation according to a sequence group hopping mode parameter $f_{gh}(n_s)$ and a sequence shift mode parameter $f_{ss}$. The specific format is as follows:

$$u = \left( f_{gh}(n_s) + f_{ss} \right) \mathrm{mod}\, 30 \quad \dots\dots\dots\dots\dots\dots\dots\dots\dots\dots\dots\dots\dots\dots\dots.\text{Formula 4}$$

where the sequence group hopping mode parameter $f_{gh}(n_s)$ in slot $n_s$ is defined as:

$$f_{gh}(n_s) = \begin{cases} 0 & \text{if group hopping is disabled} \\ \left( \sum_{i=0}^{7} c(8n_s + i) \cdot 2^i \right) \mathrm{mod}\, 30 & \text{if group hopping is enabled} \end{cases} \quad \dots\text{Formula 5}$$

In the foregoing formula, *c(i)* is a pseudorandom sequence, and an output sequence *c(n)* ($n = 0,1,...,M_{PN}{}^{-1}$) having a length of $M_{PN}$ is defined as follows:

$$c(n) = \left( x_1(n + N_C) + x_2(n + N_C) \right) \mathrm{mod}\, 2$$
$$x_1(n + 31) = \left( x_1(n + 3) + x_1(n) \right) \mathrm{mod}\, 2$$
$$x_2(n + 31) = \left( x_2(n + 3) + x_2(n + 2) + x_2(n + 1) + x_2(n) \right) \mathrm{mod}\, 2 \quad \dots\dots\dots\dots\text{Formula 6}$$

where

$N_c$ = 1600, the first 31 bits of the first sequence $x_1(n)$ are initialized with $x_1(0)=1, x_1(n)=0, n=1,2,...,30$; and the first 31 bits of the first sequence $x_2(n)$ are initialized with $c_{\text{init}} = \sum_{i=0}^{30} x_2(i) \cdot 2^i$ , where $c_{\text{init}}$ is a value used for sequence initial-

ization of $x_2(n)$.

In Formula 5, $c_{\text{init}} = \left\lfloor \dfrac{N_{\text{ID}}^{\text{cell}}}{30} \right\rfloor$, and $N_{\text{ID}}^{\text{cell}}$ represents the Common Cell ID.

For the PUCCH:

$$f_{ss} = N_{\text{ID}}^{\text{cell}} \bmod 30$$ ……………………………………………………..Formula 7

Step b: Determine the sequence group.

For the specific process of determining the sequence group, reference may be made to the specific process of setting a sequence group in the foregoing, which is not described here again. It should be noted that, the specific process of setting the sequence group in the foregoing may be executed when data is transmitted on the PUCCH, or the process may be pre-operated to obtain reference information, where the reference information is the content described in Table 3, and used for indicating sequences belonging to the same sequence group as each basic sequence. Therefore, after the basic sequence is calculated, other sequences in the same group can be obtained in a table look-up manner, which is convenient and rapid. For example, according to the Common Cell ID, u=0 is obtained through calculation, and it is obtained by looking up Table 3 that basic sequence numbers of the PUCCH in the sequence group are 0 and 9; similarly, according to the Common Cell ID, u=3 is obtained through calculation, and it is obtained by looking up Table 3 that basic sequence numbers of the PUCCH of the sequence group are 3 and 12.

Step S42: Select a basic sequence matched with a UE specific parameter from all the basic sequences in the sequence group and determine the selected basic sequence as a target basic sequence.

The specific implementation process is as follows:

First, an index number Index = (Δ)mod(K) used for indicating a position of the target basic sequence in the sequence group of the PUCCH is calculated, where Δ is a UE specific parameter (UE specific parameter, which may refer to a parameter configured for a certain UE by a base station, and is only effective to this UE), and K is the number of basic sequences in the sequence group; next, a number $u_{comp} = u_{index}$ of the target basic sequence is determined; and then, according to the number, the target basic sequence is selected from all the basic sequences in the sequence group.

For example, a sequence group has K=3 basic sequences, numbers of the basic sequences are numbers are u0, u1 and u2 in Table 1, and indexes of the three basic sequences in the sequence group are 0, 1 and 2 respectively. Assume Δ=1, *Index*=1 and corresponding $u_{comp}=u_1$ are obtained.

Definitely, in this embodiment, the basic sequence in the sequence group may also be randomly selected in a pseudorandom number generation manner, for example, a random generation manner for determining the target basic sequence is a basic sequence in the sequence group, where a value generated in the random generation manner is bound to a slot number and/or a symbol where the PUCCH is located, which is not specifically described again herein.

Step S43: Cyclically shift the target basic sequence in a cyclic shift manner determined by negotiating with a base station to obtain a required PUCCH sequence.

The specific process belongs to the prior art, which is not described here again.

Step S44: Send data to be sent after spread spectrum is performed on the data by using the PUCCH sequence.

A position of a frequency domain sub-carrier in an RB (that is, an SC-FDMA symbol) is marked as f0 to f11. Assume a data symbol of the PUCCH borne on the SC-FDMA symbol is d, and a spread spectrum sequence having the length of 12 is a0 to a11, on the SC-FDMA symbol, data sent on the sub-carrier f0 is a0×d, data sent on the sub-carrier f1 is a1×d, ......, and data sent on the sub-carrier f11 is a11×d, as shown in FIG. 5.

In the embodiments of the present invention, for the case where a macro cell and a pico cell coexist, a Common Cell ID and a sequence group including multiple basic sequences are pre-defined for a communication cell formed of the macro cell and the pico cell, where sequences formed by cyclically shifting any two basic sequences in the sequence group randomly have a low shift correlation. Therefore, all UEs in the communication cell have the same Cell ID, which means that PUCCH sequences used by all the UEs belong to the same sequence group, and a correlation between the PUCCH sequences is small, that is, the PUCCH sequences have good orthogonality, so when the UEs in the macro cell and the pico cell perform CoMP, mutual interference between the UEs can be reduced.

The following is illustrated in an example of a specific application.

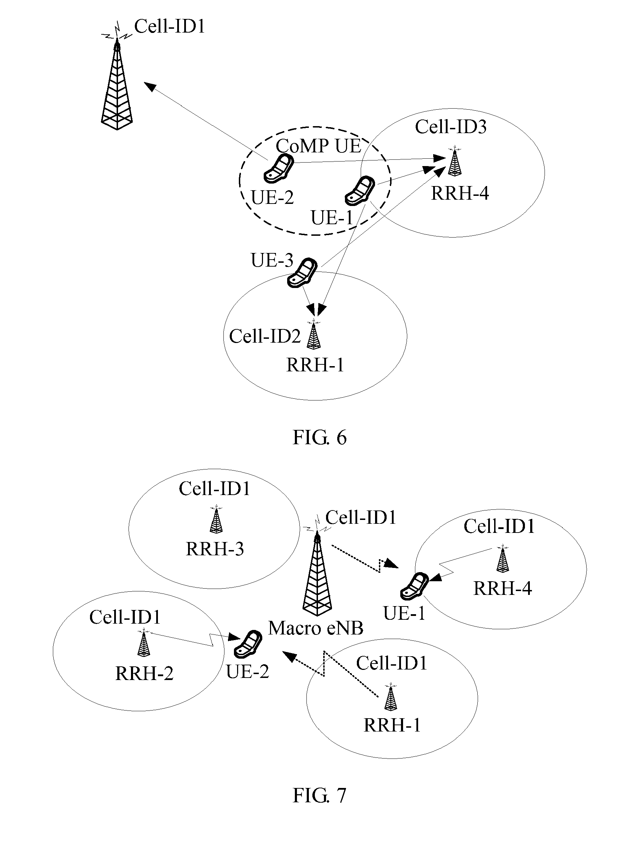

An application scenario is shown in FIG. 6. In a scenario (Scenario 3) of CoMP, a Macro eNB and two RRHs (RRH1 and RRH2) together implement cell coverage, where IDs of a macro cell and two pico cells are Cell ID1, Cell ID2 and Cell ID3 respectively, where UE-1 belongs to the Cell ID2 cell, UE-3 belongs to the Cell ID3 cell, and UE-2 belongs to the Cell ID1 cell. UE-1 and UE-2 perform CoMP, and PUCCHs of UE-1 and UE-2 are on the same time-frequency resource.

A Common Cell ID is pre-defined for the macro cell and the two pico cells, and a sequence group is set for the Common Cell ID. The sequence group at least includes two basic sequences u and v, where v is a companion sequence of u. UE-1 and UE-2 require joint reception of uplink CoMP, so the same basic sequence u may be allocated to UE-2 and UE-1, and then different cyclic shift values are allocated to ensure orthogonality of the two UEs. At the same time, the interference of UE3 with the two UEs is small, and different basic sequences may be allocated to UE3. Generally, orthogonality between sequences formed by cyclically shifting the same basic sequence differently is better than orthogonality between basic sequences in the same sequence group. Therefore, the other basic sequence v is allocated to UE-3. The two basic sequences u and v belong to the same sequence group, and a correlation between the PUCCHs is low, thereby ensuring normal communication of each UE.

It should be noted that, the method provided by the embodiment of the present invention does not simply specify that the Cell IDs of the cells are the same. In a CoMP scenario shown in FIG. 7, all the UEs share the same PUCCH resource (time domain/frequency domain/sequence), that is, the PUCCH sequences used by the UEs are sequences formed by cyclically shifting the same basic sequence differently.

In the embodiment of the present invention, a Common Cell ID and a sequence group for the Common Cell ID are defined, and the sequence group has a basic sequence and a basic sequence having a low shift correlation with the basic sequence, which means that, in the case that the PUCCH resources (time domain/frequency domain/sequences) do not need to be added, sequences formed by cyclically shifting multiple basic sequences in the same sequence group differently may be allocated to UEs in the cell. That is to say, all the UEs in a communication cell formed of the macro cell and the pico cell may use sequences formed by cyclically shifting the multiple basic sequences differently as PUCCH sequences, which, compared with the manner shown in FIG. 7 where it is simply specified that the Cell IDs of the cells are the same and compared with using a basic sequence, has more PUCCH capacity.

It should be additionally noted that, the Common Cell ID may be an additional ID, and may also be the Cell ID of the macro cell.

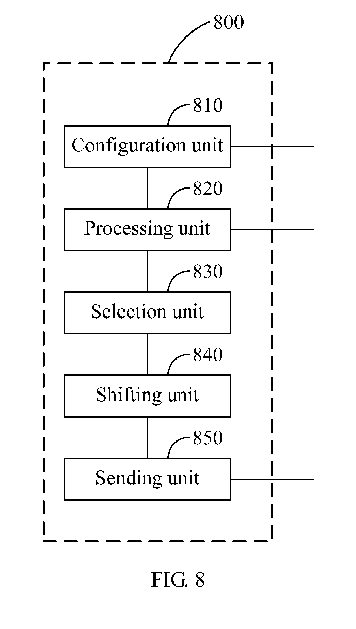

For the foregoing method, an embodiment of present invention further provides an apparatus for implementing the method. The structure of the apparatus is shown in FIG. 8. The apparatus 800 includes:

a configuration unit 810, adapted to configure a same common cell identifier for user equipments UEs;

a processing unit 820, adapted to determine a first basic sequence according to the common cell identifier, and determine, according to the first basic sequence and correspondence between the first basic sequence and at least one second basic sequence, a first sequence group including the basic sequence and the at least one second basic sequence, where the at least one second basic sequence is obtained according to a correlation with the first basic sequence;

a selection unit 830, adapted to determine a target basic sequence in the first sequence group;

a shifting unit 840, adapted to cyclically shift the target basic sequence in a cyclic shift manner determined by negotiating with a base station, to obtain a sequence for sending a PUCCH; and

a sending unit 850, adapted to send the PUCCH according to the PUCCH sequence.

The configuration unit 810 may further include: a first configuration module (not shown in FIG. 8), adapted to configure the same common cell identifier for user equipments of at least two pico cells; or a second configuration module (not shown in FIG. 8), adapted to configure the same common cell identifier for user equipments in a macro cell and at least one pico cell.

Besides, the processing unit 820 may further include: a first processing module (not shown in FIG. 8), adapted to determine a second sequence group including the first basic sequence and the at least one second basic sequence; a second processing module (not shown in FIG. 8), adapted to determine at least one first basic sequence combination that is formed of the first basic sequence and the at least one second basic sequence and that includes the first basic sequence and one second basic sequence, and determine a maximum correlation value in correlation values between sequences generated by cyclically shifting the first basic sequence and cyclically shifting the second basic sequence that are in each of the at least one first basic sequence combination; and

a third processing module (not shown in FIG. 8), adapted to use a first basic sequence combination corresponding to a minimum value in the maximum correlation values as the first sequence group.

In addition, the processing unit 820 may further include: a first processing module (not shown in FIG. 8), adapted to determine a second sequence group including the first basic sequence and the at least one second basic sequence; a fourth processing module (not shown in FIG. 8), adapted to determine at least one first basic sequence combination that is formed of the first basic sequence and at least one second basic sequence and that includes the first basic sequence and the at least two second basic sequences, combine any two of the first basic sequence and the at least two second basic sequences included in the first basic sequence combination to form a third sequence group, and determine a maximum correlation value in correlation values between sequences generated by cyclically shifting two basic sequences in a combination in the third sequence group; and

a third processing module (not shown in FIG. 8), adapted to use a first basic sequence combination corresponding to a minimum value in the maximum correlation values as the first sequence group.

In addition, the selection unit 830 may further include: a first selection module (not shown in FIG. 8), adapted to determine the target basic sequence in the first sequence group according to a UE specific parameter; or

a second selection module (not shown in FIG. 8), adapted to select a basic sequence randomly from the first sequence group as the target basic sequence.

The first selection module may further include: a calculation module (not shown in FIG. 8), adapted to calculate an index number used for indicating a position of the target basic sequence in the first sequence group according to the UE specific parameter and the number of the basic sequences in the first sequence group; and

an extraction module (not shown in FIG. 8), adapted to select the target basic sequence from the first sequence group according to the index number.

The embodiments in the specification are described in a progressive manner, each embodiment focuses on illustrating the difference from other embodiments, and for the same and similar part of the embodiments, reference may be made to each other. The apparatus disclosed in the embodiments corresponds to the method disclosed in the embodiments, so the description of the apparatus is simple, and for related content, reference may be made to the illustration of the method part.

Persons skilled in the art may understand that information, messages, and signals may be represented by using any one of many different techniques and technologies. For example, the messages and the information in the foregoing descriptions may be represented as voltages, currents, electromagnetic waves, magnetic fields or magnetic particles, optical fields, or any combination thereof.

Persons skilled in the art can further realize that, the units and the steps of algorithms described according to the embodiments disclosed herein may be implemented by electronic hardware, computer software, or a combination thereof. In order to illustrate the interchangeability of the hardware and the software clearly, the compositions and steps of the embodiments are generally described according to functions in the foregoing description. Whether these functions are executed as hardware or software depends upon the specific application and design constraint conditions of the technical solution. Persons skilled in the art can use different methods to implement the described functions for each specific application, but it should not be considered that the implementation goes beyond the scope of the present invention.

Persons of ordinary skill in the art should understand that, all or a part of processes in the method according to the embodiments may be accomplished by a computer program instructing relevant hardware. The program may be stored in a computer-readable storage medium. When the program is executed, the process of the method according to the embodiments of the present invention is performed. The storage medium may be a magnetic disk, an optical disk, a Read-Only Memory (ROM), a Random Access Memory (RAM), and the like.

Based on the description of the disclosed embodiments, persons skilled in the art can implement or apply the present invention. Various modifications of the embodiments are apparent to persons skilled in the art, and general principles defined in the specification can be implemented in other embodiments without departing from the spirit or scope of the present invention. Therefore, the present invention is not limited to the embodiments in the specification, but is intended to cover the widest scope consistent with the principle and the novel features disclosed in the specification.

**Claims**

1. A method for transmitting data on a physical uplink control channel PUCCH, wherein when user equipments UEs are configured with a same common cell identifier, the method comprises:

   determining a first basic sequence according to the common cell identifier, and determining, according to the first basic sequence and correspondence between the first basic sequence and at least one second basic sequence, a first sequence group comprising the basic sequence and the at least one second basic sequence, wherein the at least one second basic sequence is obtained according to a correlation with the first basic sequence;
determining a target basic sequence in the first sequence group;
cyclically shifting the target basic sequence in a cyclic shift manner determined by negotiating with a base station, to obtain a sequence for sending a PUCCH; and
sending the PUCCH according to the sequence for sending the PUCCH.

2. The method according to claim 1, wherein the configuring the same common cell identifier for the user equipments UEs comprises:

configuring the same common cell identifier for user equipments in at least two pico cells; or,
configuring the same common cell identifier for user equipments in a macro cell and at least one pico cell.

3. The method according to any one of claims 1 and 2, wherein the determining, according to the first basic sequence and the correspondence between the first basic sequence and the at least one second basic sequence, the first sequence group comprising the basic sequence and the at least one second basic sequence, wherein the at least one second basic sequence is obtained according to the correlation with the first basic sequence, comprises:

determining a second sequence group comprising the first basic sequence and the at least one second basic sequence;
determining at least one first basic sequence combination that is formed of the first basic sequence and the at least one second basic sequence that is in the second sequence group and that comprises the first basic sequence and one second basic sequence, and determining maximum correlation values in correlation values between sequences generated by cyclically shifting the first basic sequence and cyclically shifting the second basic sequence that are in each of the at least one first basic sequence combination; and
using a first basic sequence combination corresponding to a minimum value in the maximum correlation values as the first sequence group.

4. The method according to claim 1, wherein the determining, according to the first basic sequence and the correspondence between the first basic sequence and the at least one second basic sequence, the first sequence group comprising the basic sequence and the at least one second basic sequence, wherein the at least one second basic sequence is obtained according to the correlation with the first basic sequence, comprises:

determining a second sequence group comprising the first basic sequence and the at least one second basic sequence;
determining at least one first basic sequence combination that is formed of the first basic sequence and the at least one second basic sequence in the second sequence group and that comprises the first basic sequence and at least two second basic sequences, combining any two of the first basic sequence and at least two second basic sequences comprised in the first basic sequence combination to form a third sequence group, and determining a maximum correlation value in correlation values between sequences generated by cyclically shifting two basic sequences in a combination in the third sequence group; and
using a first basic sequence combination corresponding to a minimum value in the maximum correlation values as the first sequence group.

5. The method according to any one of claims 1 to 4, wherein determining a basic sequence that can be used for sending the PUCCH according to the common cell identifier comprises:

determining the basic sequence that can be used for sending the PUCCH according to a sequence group hopping mode parameter $f_{gh}(n_s)$ and a sequence shift mode parameter $f_{ss}$.

6. The method according to any one of claims 1 to 5, wherein the determining the target basic sequence in the first sequence group comprises:

determining the target basic sequence in the first sequence group according to a UE specific parameter; or,
selecting a basic sequence randomly from the first sequence group as the target basic sequence.

7. The method according to claim 6, wherein the determining the target basic sequence in the first sequence group according to the UE specific parameter comprises:

calculating an index number used for indicating a position of the target basic sequence in the first sequence group according to the UE specific parameter and the number of the basic sequences in the first sequence group; and

selecting the target basic sequence from the first sequence group according to the index number.

8. The method according to any one of claims 1 to 7, wherein the common cell identifier is a cell identifier of the macro cell.

9. An apparatus for transmitting data on a physical uplink control channel PUCCH, comprising:

a configuration unit, adapted to configure a same common cell identifier for user equipments UEs;
a processing unit, adapted to determine a first basic sequence according to the common cell identifier configured by the configuration unit, and determine, according to the first basic sequence and correspondence between the first basic sequence and at least one second basic sequence, a first sequence group comprising the basic sequence and the at least one second basic sequence, wherein the at least one second basic sequence is obtained according to a correlation with the first basic sequence;
a selection unit, adapted to determine a target basic sequence in the first sequence group determined by the processing unit;
a shifting unit, adapted to cyclically shift the target basic sequence determined by the selection unit in a cyclic shift manner determined by negotiating with a base station, to obtain a sequence for sending a PUCCH; and
a sending unit, adapted to send the PUCCH according to the sequence for sending the PUCCH obtained by the shifting unit.

10. The apparatus according to claim 9, wherein the configuration unit comprises:

a first configuration module, adapted to configure the same common cell identifier for user equipments in at least two pico cells; or,
a second configuration module, adapted to configure the same common cell identifier for user equipments in a macro cell and at least one pico cell.

11. The apparatus according to claim 9, wherein the processing unit comprises:

a first processing module, adapted to determine a second sequence group comprising the first basic sequence and the at least one second basic sequence;
a second processing module, adapted to determine at least one first basic sequence combination that is formed of the first basic sequence and the at least one second basic sequence that is in the second sequence group determined by the first processing module and that comprises the first basic sequence and one second basic sequence, and determine a maximum correlation value in correlation values between sequences generated by cyclically shifting the first basic sequence and the second basic sequence in the at least one first basic sequence combination; and
a third processing module, adapted to use a first basic sequence combination corresponding to a minimum value in the maximum correlation values determined by the second processing module as the first sequence group.

12. The apparatus according to claim 9, wherein the processing unit comprises:

a first processing module, adapted to determine a second sequence group comprising the first basic sequence and the at least one second basic sequence;
a fourth processing module, adapted to determine at least one first basic sequence combination that is formed of the first basic sequence and the at least one second basic sequence that is in the second sequence group determined by the first processing module and that comprises the first basic sequence and at least two second basic sequences, combine any two of the first basic sequence and the at least two second basic sequences comprised in the first basic sequence combination to form a third sequence group, and determine a maximum correlation value in correlation values between sequences generated by cyclically shifting two basic sequences in a combination in the third sequence group; and
a third processing module, adapted to use a first basic sequence combination corresponding to a minimum value in the maximum correlation values determined by the fourth processing module as the first sequence group.

13. The apparatus according to claim 9, wherein the selection unit comprises:

a first selection module, adapted to determine the target basic sequence in the first sequence group according to a UE specific parameter; or

a second selection module, adapted to select a basic sequence randomly from the first sequence group as the target basic sequence.

14. The apparatus according to claim 13, wherein the first selection module comprises:

a calculation module, adapted to calculate an index number used for indicating a position of the target basic sequence in the first sequence group according to the UE specific parameter and the number of the basic sequences in the first sequence group; and

an extraction module, adapted to select the target basic sequence from the first sequence group according to the index number.

15. The method according to any one of claims 9 to 14, wherein the common cell identifier is a cell identifier of the macro cell.

Cell-ID4

RRH-3

Cell-ID1

Cell-ID5

RRH-4

UE-1

Cell-ID3

RRH-2 UE-2

Cell-ID2

RRH-1

FIG. 1

Cell-ID1

Cell-ID3

RRH-2

UE-2

UE-1

UE-3

Cell-ID2

RRH-1

FIG. 2

FIG. 3

Determine a sequence group of the PUCCH according to the Common Cell ID — S41

Select a basic sequence matched with a UE specific parameter from all the basic sequences in the sequence group and determine the selected basic sequence as a target basic sequence — S42

Cyclically shift the target basic sequence in a cyclic shift manner determined by negotiating with a base station to obtain a required PUCCH sequence — S43

Send data to be sent after spread spectrum is performed on the data by using the PUCCH sequence — S44

FIG. 4

| $a_0d$ | $a_1d$ | $a_2d$ | $a_3d$ | $a_4d$ | $a_5d$ | $a_6d$ | $a_7d$ | $a_8d$ | $a_9d$ | $a_{10}d$ | $a_{11}d$ |
|---|---|---|---|---|---|---|---|---|---|---|---|
| $f_0$ | $f_1$ | $f_2$ | $f_3$ | $f_4$ | $f_5$ | $f_6$ | $f_7$ | $f_8$ | $f_9$ | $f_{10}$ | $f_{11}$ |

FIG. 5

Cell-ID1

Cell-ID3

CoMP UE

UE-2

UE-1

RRH-4

UE-3

Cell-ID2

RRH-1

FIG. 6

Cell-ID1

RRH-3

Cell-ID1

Cell-ID1

RRH-4

Cell-ID1

RRH-2

UE-2

Macro eNB

UE-1

Cell-ID1

RRH-1

FIG. 7

FIG. 8

# INTERNATIONAL SEARCH REPORT

International application No.

**PCT/CN2012/085545**

### A. CLASSIFICATION OF SUBJECT MATTER

H04W 72/08 (2009.01) i

According to International Patent Classification (IPC) or to both national classification and IPC

### B. FIELDS SEARCHED

Minimum documentation searched (classification system followed by classification symbols)

IPC: H04W, H04B

Documentation searched other than minimum documentation to the extent that such documents are included in the fields searched

Electronic data base consulted during the international search (name of data base and, where practicable, search terms used)

CPRSABS, CNTXT, CNKI: base sequence, root sequence, ZADOFF CHU, ZC, group, CELL, identification, ID, correlation value

VEN, 3GPP: BASE SEQUENCE, ROOT SEQUENCE, ZADOFF CHU, ZC, GROUP, CELL, ID, CORRELATION

### C. DOCUMENTS CONSIDERED TO BE RELEVANT

| Category* | Citation of document, with indication, where appropriate, of the relevant passages | Relevant to claim No. |
|---|---|---|
| A | CN 102026298 A (ZTE CORP.), 20 April 2011 (20.04.2011), the whole document | 1-15 |
| A | R1-113282, Uplink Control Signals for CoMP, 14 October 2011 (14.10.2011), the whole document | 1-15 |
| A | CN 101262255 A (HUAWEI TECHNOLOGIES CO., LTD.), 10 September 2008 (10.09.2008), the whole document | 1-15 |
| A | US 2009046645 A1 (TEXAS INSTR INC.), 19 February 2009 (19.02.2009), the whole document | 1-15 |

☐ Further documents are listed in the continuation of Box C.     ☒ See patent family annex.

| | |
|---|---|
| *   Special categories of cited documents:<br><br>"A"   document defining the general state of the art which is not considered to be of particular relevance<br><br>"E"   earlier application or patent but published on or after the international filing date<br><br>"L"   document which may throw doubts on priority claim(s) or which is cited to establish the publication date of another citation or other special reason (as specified)<br><br>"O"   document referring to an oral disclosure, use, exhibition or other means<br><br>"P"   document published prior to the international filing date but later than the priority date claimed | "T"   later document published after the international filing date or priority date and not in conflict with the application but cited to understand the principle or theory underlying the invention<br><br>"X"   document of particular relevance; the claimed invention cannot be considered novel or cannot be considered to involve an inventive step when the document is taken alone<br><br>"Y"   document of particular relevance; the claimed invention cannot be considered to involve an inventive step when the document is combined with one or more other such documents, such combination being obvious to a person skilled in the art<br><br>"&"   document member of the same patent family |
| Date of the actual completion of the international search<br><br>16 February 2013 (16.02.2013) | Date of mailing of the international search report<br><br>**07 March 2013 (07.03.2013)** |
| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**LI, Lingyu**<br><br>Telephone No.: (86-10) **62411892** |

Form PCT/ISA/210 (second sheet) (July 2009)

## INTERNATIONAL SEARCH REPORT
### Information on patent family members

| | International application No. |
|---|---|
| | **PCT/CN2012/085545** |

| Patent Documents referred in the Report | Publication Date | Patent Family | Publication Date |
|---|---|---|---|
| CN 102026298 A | 20.04.2011 | WO 2011035590 A1 | 31.03.2011 |
| CN 101262255 A | 10.09.2008 | CN 101542935 B | 10.11.2010 |
| | | KR 1095420 B1 | 16.12.2011 |
| | | JP 4922412 B2 | 25.04.2012 |
| | | US 2009303960 A1 | 10.12.2009 |
| | | JP 2010517391 A | 20.05.2010 |
| | | US 20120281671 A1 | 08.11.2012 |
| | | KR 20090101282 A | 24.09.2009 |
| | | CN 101399793 A | 01.04.2009 |
| | | EP 2101419 B1 | 09.02.2011 |
| | | DE 602008004885 D1 | 24.03.2011 |
| | | US 8249006 B2 | 21.08.2012 |
| | | US 2012087326 A1 | 12.04.2012 |
| | | WO 2008106894 A1 | 12.09.2008 |
| | | EP 2101419 A1 | 16.09.2009 |
| | | CN 101542935 A | 23.09.2009 |
| US 2009046645 A1 | 19.02.2009 | WO 2009023692 A2 | 19.02.2009 |
| | | WO 2009023692 A3 | 16.04.2009 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201110386749